Europäisches Patentamt

European Patent Office

Office européen des brevets

(19)

(11) **EP 1 153 231 B1**

(12) **EUROPÄISCHE PATENTSCHRIFT**

(45) Veröffentlichungstag und Bekanntmachung des Hinweises auf die Patenterteilung:
**19.06.2002   Patentblatt 2002/25**

(51) Int Cl.$^7$: **F16H 61/00**

(21) Anmeldenummer: **00910684.0**

(22) Anmeldetag: **21.02.2000**

(86) Internationale Anmeldenummer:
**PCT/EP00/01402**

(87) Internationale Veröffentlichungsnummer:
**WO 00/50786 (31.08.2000 Gazette 2000/35)**

(54) **VERFAHREN ZUR ERMITTLUNG VON VERSTELLGESCHWINDIGKEITEN BEI EINEM STUFENLOSEN GETRIEBE**

METHOD FOR DETERMINING ADJUSTING SPEEDS IN A CONTINUOUSLY VARIABLE TRANSMISSION

PROCEDE POUR LA DETERMINATION DE VITESSES DE REGLAGE D'UNE TRANSMISSION A VARIATION CONTINUE

(84) Benannte Vertragsstaaten:
**DE FR GB SE**

(30) Priorität: **25.02.1999   DE 19908251**

(43) Veröffentlichungstag der Anmeldung:
**14.11.2001   Patentblatt 2001/46**

(73) Patentinhaber: **ZF Batavia, L.L.C.**
**Batavia, OH 45103 (US)**

(72) Erfinder:
• **VORNDRAN, Ralf**
**D-88097 Eriskirch (DE)**
• **DANZ, Wolfgang**
**D-88046 Friedrichshafen (DE)**
• **REITER, Friedrich**
**D-88079 Kressbronn (DE)**
• **PIEPENBRINK, Andreas**
**D-88709 Meersburg (DE)**
• **SCHWENGER, Andreas**
**D-88048 Friedrichshafen (DE)**

(74) Vertreter: **Zietlow, Karl-Peter**
**ZF FRIEDRICHSHAFEN AG**
**88038 Friedrichshafen (DE)**

(56) Entgegenhaltungen:
| | |
|---|---|
| EP-A- 0 529 777 | EP-A- 0 785 382 |
| DE-A- 19 527 412 | DE-A- 19 606 311 |
| US-A- 5 012 697 | US-A- 5 020 392 |
| US-A- 5 257 960 | US-A- 5 720 692 |
| US-A- 5 803 862 | |

**Beschreibung**

Die vorliegende Erfindung betrifft ein Verfahren zur Berechnung der konstruktiven, betriebspunktabhängigen maximalen und minimalen Verstellgeschwindigkeiten bei einem stufenlosen Umschlingungsgetriebe mit elektrohydraulischer Ansteuerung gemäß dem Oberbegriff des Patentanspruchs 1, so wie es aus DE-A-19 606 311 hervorgeht.

Ein stufenloses Umschlingungsgetriebe besteht üblicherweise u.a. aus einer Anfahreinheit, einer Vorwärts/Rückwärtsfahreinheit, einer Zwischenwelle, einem Differential, aus hydraulischen und elekronischen Steuereinrichtungen sowie aus einem Variator. Der Variator umfasst üblicherweise eine Primär- und eine Sekundärscheibe auch Primär- und Sekundärseite genannt, wobei beide Scheiben aus paarweise angeordneten Kegelscheiben gebildet sind und ist mit einem momentenübertragenden Umschlingungselement versehen, das zwischen den beiden Kegelscheibenpaaren umläuft.

In einem derartigen Getriebe wird die aktuelle Übersetzung durch den Laufradius des Umschlingungselementes definiert, der wiederum eine Funktion der axialen Position der Kegelscheiben ist.

Stufenlose Getriebe besitzen im allgemeinen im Vergleich mit standardmäßigen Schaltgetrieben prinzipbedingt einen Freiheitsgrad mehr, da es außer der Wahl der einzustellenden Übersetzungstufe hier zusätzlich möglich ist, die Verstellgeschwindigkeit, mit der die Übersetzung von einem Betriebspunkt auf den anderen überführt wird, vorzugeben und zu beeinflussen.

Bei stufenlosen Getrieben mit einem Umschlingungselement (Band, Kette) als momentenübertragendem Bauteil ergibt sich aus dem konstruktiven Aufbau, daß bei der Übersetzungsänderung die Kegelscheibenpaare von Primär-und Sekundärseite des Variators wechselseitig und komplementär zueinander über entsprechende Ansteuerelemente auseinander und zusammengeschoben werden, was eine Änderung des Laufradius des Umschlingungselementes auf den Kegelscheiben und somit eine Änderung der Übersetzung zwischen Primär-und Sekundärseite bewirkt.

Der Variator wird üblicherweise hydraulisch angesteuert. Hierbei bedeutet die axiale Verschiebung der Kegelscheiben eine Volumenänderung, die, da die Verstellung kraft-bzw. druckgesteuert abläuft - von der Ansteuerhydraulik über entsprechende Volumenstromänderungen in die jeweiligen Kegelscheibenpaare kompensiert werden muß.

Die über die elektrohydraulische Ansteuerung einzustellende Volumenstromänderung hängt dabei direkt von der aktuellen Verstellgeschwindigkeit der Kegelscheibenpaare ab.

Da die Ansteuerhydraulik in der Regel über eine motordrehzahlabhängige Pumpe mit konstruktiv vorgegebenem Maximalvolumenstrom versorgt wird, entsteht zwangsläufig auch eine konstruktiv feststehende Grenze für die realisierbare Verstelldynamik des Variators. Der Variator kann nur so schnell verstellt werden, wie es der zur Verfügung stehende Ölvolumenstrom im Zusammenspiel mit anderen Steuer-und Regelkreisen bzw. Verbrauchern zulässt.

Bei der konstruktiven Auslegung der Versorgungspumpe spielen neben der Sicherstellung der notwendigen Ölvolumenströme auch Aspekte wie Geräusch und Wirkungsgrad, die sich beide in der Regel mit steigender Pumpengröße negativ auswirken, eine wesentliche Rolle. Dies führt dazu, daß für die konstruktive Pumpenauslegung ein Kompromiß zwischen den verschiedenen Kriterien realisiert wird, der betriebspunkt- und auf die Einzelkriterien bezogen lediglich eine suboptimale Lösung ist.

Auf die einstellbaren Verstellgeschwindigkeiten des Variators bezogen bedeutet das, daß es immer Betriebszustände geben wird, wo theoretisch höhere Verstellgradienten möglich wären als die aktuelle Verfügbarkeit des Ölvolumenstroms es momentan zulässt.

Diese Betriebszustände sind für eine übergeordnete Regeleinrichtung besonders kritisch, da die Regelung ohne das Übertragungsmedium Öl keinen Durchgriff auf das Verhalten des Variators und damit auf die Übersetzungseinstellung hat. Die Folge sind Instabilitäten, die sich bis hin zur Zerstörung der Getriebemechanik auswirken können.

Einen weiteren Aspekt bilden die bauartbedingten Einschränkungen (Bauteilfestigkeiten, Grenzwerte für Ansteuerdrücke) am Variator, die, um eine Beschädigung oder sogar Zerstörung der Getriebmechanik zu vermeiden, ebenfalls in jedem Zeitpunkt berücksichtigt werden müssen.

Eine einfache Realisisierungsmöglichkeit wäre es, empirische Grenzwerte für den zulässigen Verstellgradienten vorzugeben, die weit genug von den kritischen Werten entfernt liegen. Der Nachteil dabei ist, daß das mögliche Verstellpotential in diesem Fall nicht im erforderlichen Maß ausgenutzt werden kann. Ferner ist eine Generalisierbarkeit in Hinblick auf die Sicherheit in allen Betriebszuständen kaum möglich.

Der vorliegenden Erfindung liegt daher die Aufgabe zugrunde, ausgehend von dem erwähnten Stand der Technik, ein Verfahren zur Berechnung und Berücksichtigung der konstruktiven, betriebspunktabhängigen maximalen und minimalen Verstellgeschwindigkeiten bei der Übersetzungsregelung eines stufenlosen Umschlingungsgetriebes mit elektrohydraulischer Ansteuerung anzugeben.

Demnach wird vorgeschlagen, über ein physikalisch mathematisches Modell in jedem Betriebszustand ständig die aktuellen Grenzwerte für die maximal möglichen Verstellgradienten zu berechnen. Die besonderen Randbedingungen von Ölversorgung (Volumenstromgrenzwerte) und bauartbedingte geometrische Verhältnisse am Variator werden dabei berücksichtigt. Den Berechnungen liegt ein mathematisch physikalisches Modell zugrunde. Nach einem Auswahlverfahren zur Festlegung der für die übergeordnete Verstellregelung relevanten Verstellgeschwindigkeitsgrenzen werden diese Werte in einem Regelkreis zum Einstellen eines vorgegebenen Übersetzungssollwertes verwendet.

Hierbei wird eine Regelkreisstruktur verwendet, wie sie z.B. in der DE 196 06 311 A1 der Anmelderin beschrieben ist. Derartige Regelkreisstrukturen kombinieren eine physikalisch-mathematisch modellbasierte Linearisierung der Regelstrecke mittels eines Korrekturgliedes mit einem linearen PID-Regler. Die Stellgröße des PID-Reglers wird dabei direkt als Vorgabe für den einzustellenden Verstellgradienten interpretiert.

Im folgenden wird die Erfindung anhand der beigefügten Zeichnung näher erläutert. In dieser stellen dar:

Figur 1 Ein Blockschaltbild der Regelkreisstruktur mit der Berechnung der bauartbedingten Grenzwerte gemäß der vorliegenden Erfindung;

Figur 2 Eine schematische Darstellung der aktiven Stellgrenzen gemäß der vorliegenden Erfindung; und

Figur 3 Einen Signalflußplan des Verfahrens gemäß der vorliegenden Erfindung.

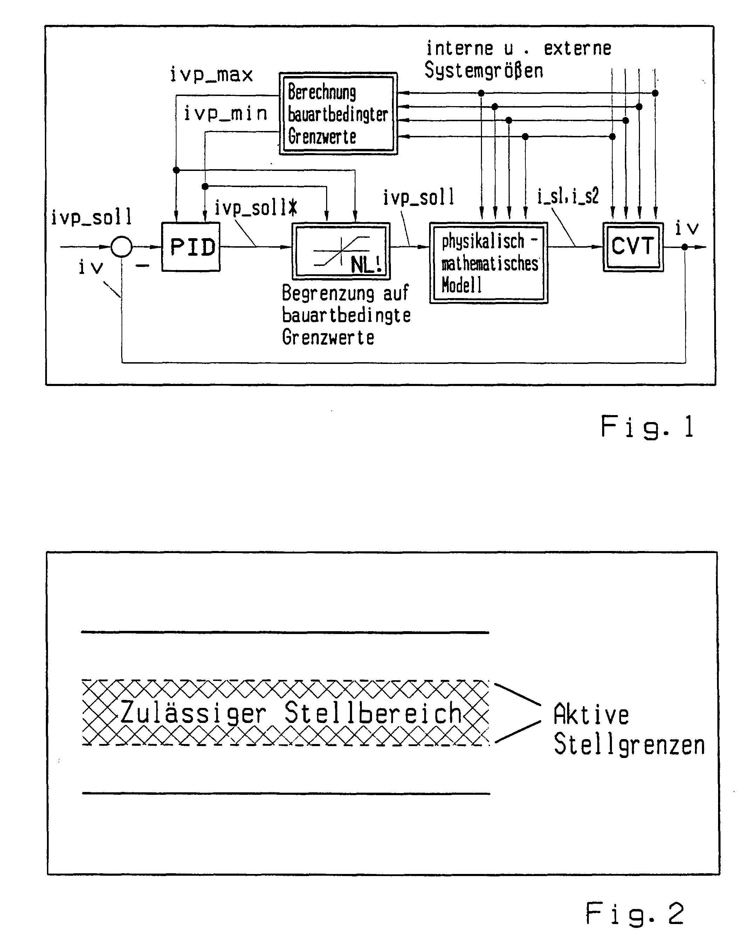

Gemäß Figur 1 wird die aus dem Stand der Technik bekannte Regelkreisstruktur mit der Soll-Übersetzung iv_soll als Führungsgröße und der Ist-Übersetzung iv als Regelgröße um ein Glied erweitert, welches die vom PID-Regler gelieferte Stellgröße Verstellgeschwindigkeit auf bauartbedingte Grenzwerte begrenzt. Diese bauartbedingten Grenzwerte werden in Abhängigkeit von unterschiedlichen Systemparametern kontinuierlich berechnet.

Zur Berechnung der Verstellgeschwindigkeitsgrenzwerte werden erfindungsgemäß sowohl konstruktionsbedingte Grenzen (Bauteilfestigkeit) als auch Volumenstromgrenzen berücksichtigt.

Zur Berechnung der konstruktionsbedingten Verstellgeschwindigkeitsgrenzwerte werden folgende Gleichungen herangezogen:

Der von den primär- und sekundärseitig eingeleiteten Drücken (Kräften) abhängige Verstellgradient (Übersetzungsänderungsgeschwindigkeit, Verstellgeschwindigkeit) kann nach dem Stand der Technik als physikalisch-mathematische Modellgleichung wie folgt dargestellt werden:

$$k(iv) \cdot \frac{div}{dt} = p_2 \cdot A_2 \cdot k_p k_s - p_1 \cdot A_1$$

mit:

| | |
|---|---|
| $k(iv)$ | übersetzungsabhängiger Dämpfungsbeiwert |
| $div/dt$ | Verstellgradient (Übersetzungsgradient) |
| $p_1$ | Ansteuerdruck der Primärseite |
| $p_2$ | Ansteuerdruck der Sekundärseite |
| $A_1$ | Scheibenfläche der Primärseite |
| $A_2$ | Scheibenfläche der Sekundärseite |
| $k_p k_s$ | Verstellkraftverhältnis |

Folglich gilt für den Verstellgeschwindigkeitsgrenzwert für eine Hochschaltung:

$$\left. \frac{div}{dt} \right|_{konstr.,min} = \frac{1}{k(iv)} \cdot \left( p_{2,min} \cdot A_2 \cdot k_p k_s - P\_S1\_MAX \cdot A_1 \right)$$

und für eine Rückschaltung:

$$\left. \frac{div}{dt} \right|_{konstr.,max} = \frac{1}{k(iv)} \cdot \left( P\_S2\_MAX \cdot A_2 \cdot k_p k_s - p_{1,min} \cdot A_1 \right)$$

mit:

| $p_{1,min}$ | minimaler Anpreßdrucksollwert Primärseite |
| $p_{2,min}$ | minimaler Anpreßdrucksollwert Sekundärseite |
| P_S1_MAX | maximaler zulässiger Druckwert Primärseite |
| P_S2_MAX | maximaler zulässiger Druckwert Sekundärseite, |

wobei jeweils für die Drücke der Primär- bzw. Sekundärseite die maximal zulässigen Druckwerte P_S1_MAX bzw. P_S2_MAX eingesetzt werden.

Die Berechnung der minimalen Anpreßdruckminimalkräfte bzw. Anpreßdrucksollwerte für beide Variatorseiten erfolgt anhand folgender Gleichungen:

$$p_{1,min} = \frac{T_1 \cdot \cos(\alpha)}{2 \cdot \mu \cdot A_1 \cdot r_1} \cdot SF_1$$

$$p_{2,min} = \frac{T_1 \cdot \cos(\alpha)}{2 \cdot \mu \cdot A_2 \cdot r_1} \cdot SF_2$$

mit:

| $p_{1,min}$ | Anpreßdruckminimalkraft Primärseite |
| $p_{2,min}$ | Anpreßdruckminimalkraft Sekundärseite |
| $T_1$ | Antriebsmoment an der Primärseite des Variators |
| $A_1$ | Scheibenfläche der Primärseite |
| $A_2$ | Scheibenfläche der Sekundärseite |
| $r_1$ | aktueller Laufradius Primärseite |
| $\alpha$ | Scheibenwinkel |
| $\mu$ | Reibbeiwert des Kontaktes Band-Kegelscheibe |
| $SF_1$ | Sicherheitsfaktor der Primärseite |
| $SF_2$ | Sicherheitsfaktor der Sekundärseite |

Die Verstellgeschwindigkeitsgrenzen in Abhängigkeit der Volumenstromgrenzen werden erfindungsgemäß wie folgt berechnet:

Zuerst wird der zur Verfügung stehende Ölvolumenstrom Q_Verstell unter Berücksichtigung der Leckagevolumenströme $\Sigma$ Q_Leck berechnet:

$$Q\_Verstell = Q\_Pumpe - \Sigma\ Q\_Leck$$

Die Summe der Leckagevolumenströme $\Sigma$ Q_Leck ist abhängig von den konstruktiven Gegebenheiten und kann dementsprechend variieren. Allgemein gilt:

$$\Sigma\ Q\_Leck = Q\_Leck\_S1 + Q\_Leck\_S2 + Q\_Leck\_KV + Q\_Leck\_WK +$$

$$Q\_Leck\_STG + Q\_Schmier,$$

wobei der Volumenstrom der Pumpe Q_Pumpe eine Funktion der Öltemperatur T_Öl und der Motordrehzahl n_Mot ist und als Kennfeld abgelegt ist.

Die Leckagevolumenströme der unterschiedlichen Verbraucher z.B. der Primär- und Sekundärseite des Variators S1 bzw. S2, der Vorwärtskupplung KV, der Bremse BR sowie der Wandlerüberbrückungskupplung WK sind vom jeweils angewandten Druck p_s1, p_s2, p_kv und p_wk abhängig:

$$Q\_Leck\_S1 = f(p\_S1) \Rightarrow q\_leckS1 = K\_QLECKS1 * p\_s1$$

$$Q\_Leck\_S2 = f(p\_S2) \Rightarrow q\_leckS2 = K\_QLECKS2 * p\_s2$$

$$Q\_Leck\_KV = f(p\_KV) \Rightarrow q\_leckKV = K\_QLECKKV * p\_kv$$

$$Q\_Leck\_WK = f(p\_WK) \Rightarrow q\_leckWK = K\_QLECKWK * p\_wk$$

Hierbei wird die prinzipielle Abhängigkeit von der Öltemperatur in den Parametern K_QLECKS1, K_QLECKS2, K_QLECKKV und K_QLECKWK (bei der Erzeugung der Daten) berücksichtigt.

Der Leckagevolumenstrom der Steuerung Q_Leck_STG ist als Kennfeld abgelegt: Q_Leck_STG = f(p_H, p_S2 ); p_H ist hierbei der Systemdruck im hydraulischen Steuergerät.

Für die Leckagevolumenströme der Schmierung Q_Schmier wird ein konstanter Wert angenommen.

Im hydraulischen Steuergerät ist bauartbedingt eine Priorisierung der Ansteuerzweige enthalten. Im vorliegenden Fall haben der Variator (S1, S2) und der Wendesatz (KV, BR) die oberste Priorität. Die zweite Priorität hat die WK und die Schmierung. Folglich wird ein Ölmangel im Primärzweig (Variator, KV, BR) aus dem Sekundärzweig gedeckt. Die Schmierung bzw. die WK sind in diesem Zustand untergeordnet.

Die Priorisierung wird in der Berechnung der zur Verfügung stehenden Ölmenge berücksichtigt, indem über eine mehrstufige Abfrage geprüft wird, ob der verbleibende Volumenstrom ungleich Null ist.

Ausgehend von der bereits eingeführten Volumenstrombilanz: Q_Verstell = Q_Pumpe - Q_Leck_S1 - Q_Leck_S2 - Q_Leck_KV - Q_Leck_WK - Q_Leck_STG - Q_Schmier wird erfindungsgemäß geprüft, ob der erforderliche Ölvolumenstrom zur Verfügung steht. Wird diese Bedingung nicht erfüllt, so bedeutet dies, dass Q_Verstell < 0 ist. In diesem Fall wird der Term Q_Schmier aus der weiteren Berechnung herausgenommen und anschliessend wieder die Bedingung auf Erfüllung hin geprüft. Bei erneutem negativem Wert für die Grösse Q_Verstell wird der Term Q_WK ebenfalls aus der Berechnung herausgenommen. Der Variator kann jetzt den vollen Volumenstrom, der sonst in den Sekundärkreis abfließt, zur Verstellung nutzen. Bei erneutem Nichtvorhandensein des erforderlichen Ölvolumenstroms wird die Verstellgeschwindigkeit soweit zurückgenommen, daß die Grenzwerte nicht überschritten werden und die Versorgung aufrechterhalten bleibt. Im Extremfall kann eine Verstellung generell untersagt werden der Vorgang unterbrochen, da es sonst zu Beschädigungen des Variators kommen kann.

Diese Vorgehensweise lässt sich schematisch wie folgt darstellen:

WENN

$$(Q\_Verstell < 0)$$

DANN

$$Q\_Verstell = Q\_Pumpe - Q\_Leck\_S1 - Q\_Leck\_S2 -$$

$$Q\_Leck\_KV - Q\_Leck\_WK - Q\_Leck\_STG$$

WENN

$$(Q\_Verstell < 0)$$

DANN

$$Q\_Verstell = Q\_Pumpe - Q\_Leck\_S1 -$$

$$Q\_Leck\_S2 - Q\_Leck\_KV - Q\_Leck\_STG$$

WENN

$$Q\_Verstell < 0$$

DANN

$$Q\_Verstell = 0$$

Die Berechnung des zulässigen Verstellgeschwindigkeitsbereichs in Abhängigkeit der Volumenstromgrenzen geschieht erfindungsgemäß wie folgt:

Für die maximale zulässige Verstellgeschwindigkeit Richtung "Low" (Rückschaltung) ivpktvol_max gilt:

$$ivpktvol\_max = Q\_Verstell/dVS2\_diV$$

Entsprechend gilt für die minimale zulässige Verstellgeschwindigkeit ivpktvol_min Richtung "OD" (Hochschaltung):

$$ibpktvol\_min = Q\_Verstell/dVS1\_diV$$

Die Größen dVS1_diV bzw. dVS2_diV beschreiben die dynamische Volumenänderung in den Variatorscheiben bei Veränderung der Übersetzung.

Zur Optimierung der Rechenzeit werden erfindungsgemäß die in der Berechnung enthaltenen Leckagevolumenströme sowie die dynamischen Volumenänderungen der Variatorscheiben auf dem Getriebesteuergerät über Kennlinien bzw. Kennfelder dargestellt.

Die Berechnung der aktuellen Stellgrenzen für die übergeordnete Verstellregelung erfolgt aus dem Vergleich der zulässigen Verstellgeschwindigkeiten aufgrund der konstruktionsbedingten Grenzen mit den Grenzwerten, die sich aus der Volumenstrombetrachtung ergeben. Hierbei wird die Schnittmenge der beiden Intervalle als zulässiger Verstellgeschwindigkeitsbereich definiert.

Wie aus Figur 2 ersichtlich liegen insgesamt 4 Stellgrenzen vor, wobei die beiden "inneren" Werte als aktive Stellgrenzen ausgewiesen werden.

Da die vier Grenzwerte in ihrem Wertebereich prinzipiell keiner festgelegten Ordnung folgen, wird die Auswahl des zulässigen Stellbereichs über einen Größenvergleich ausgewertet. Es ist dabei zu beachten, daß die Grenzwerte vorzeichenbehaftet sind.

Die die Reglerstellgröße einschränkenden Verstellgeschwindigkeitsgrenzwerte dienen dem Regler gleichzeitig zur Einleitung von sog. "Anti-Wind-Up-Maßnahmen". (Wind-Up=Weglaufen eines im Regler befindlichen I-Anteils aufgrund einer unbekannten Stellgrößenbegrenzung)

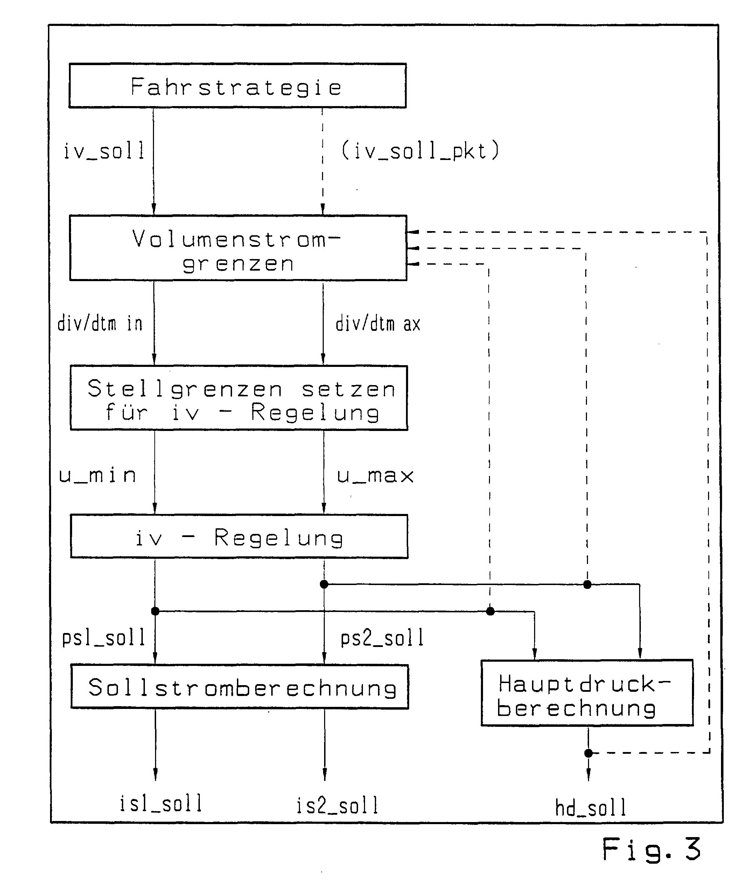

Die erfindungsgemäße Vorgehensweise zur Berechnung der konstruktiven, betriebspunktabhängigen maximalen und minimalen Verstellgeschwindigkeiten wird gemäß dem Signalflussplan aus Fig. 3 zwischen der übergeordneten Fahrstrategie, die die Werte für die Übersetzungsvorgabe generiert, und dem nachfolgenden Übersetzungsregler eingefügt. Eventuelle Sonderfunktionen, die eine zusätzliche Veränderung der Betriebspunktlage bewirken, können ebenfalls entsprechend ihrer Spezifikation berücksichtigt werden.

Physikalisch betrachtet, müßte wegen der Abhängigkeiten der Verstellgrenzen von den aktuellen Druckniveaus, die Berechnung der Systemgrenzen rekursiv, gemäß den in Fig. 3 gestrichelt dargestellten Signalpfaden, erfolgen. (Die Reglerstellgrößen ps1_soll und ps2_soll sind Funktionen der berechneten Systemgrenzen (Volumenstromgrenzen, Druckgrenzen). Die Berechnung der Systemgrenzen selbst hängt wiederum von den Druckwerten ps1_soll, ps2_soll ab.) Da diese Art der Realisierung aus Zeitgründen nur schwer in der EGS zu realisieren ist, wird darauf verzichtet.

**Patentansprüche**

1. Verfahren zur Übersetzungsregelung für ein stufenloses Umschlingungsgetriebe mit elektrohydraulischer Ansteuerung mittels eines Regelkreises mit einem linearen PID-Regler mit der Soll-Übersetzung des Variators iv_soll als Führungsgröße, der Ist-Übersetzung iv als Regelgröße und der Übersetzungsänderungsgeschwindigkeit als Stellgröße, **dadurch gekennzeichnet, dass** die vom PID-Regler gelieferte Stellgröße auf bauartbedingte Grenzwerte für eine Hoch- und Rückschaltung begrenzt wird, wobei diese Grenzwerte aus den konstruktionsbedingten und den volumenstrombedingten, betriebspunktabhängigen Grenzen berechnet werden und die Schnittmenge der beiden konstruktionsbedingt und volumenstrombedingt zulässigen Intervalle als zulässiger Übersetzungsänderungsgeschwindigkeitsbereich definiert wird.

**2.** Verfahren nach Anspruch 1, **dadurch gekennzeichnet, dass** die konstruktionsbedingten Übersetzungsänderungsgeschwindigkeitsgrenzwerte für eine Hochschaltung

$$\left.\frac{div}{dt}\right|_{konstr.,min}$$

und für eine Rückschaltung

$$\left.\frac{div}{dt}\right|_{konstr.,max}$$

mittels folgender Gleichungen berechnet werden,

$$\left.\frac{div}{dt}\right|_{konstr.,min} = \frac{1}{k(iv)} \cdot \left(p_{2,min} \cdot A_2 \cdot k_p k_s - P\_S1\_MAX \cdot A_1\right)$$

$$\left.\frac{div}{dt}\right|_{konstr.,max} = \frac{1}{k(iv)} \cdot \left(P\_S2\_MAX \cdot A_2 \cdot k_p k_s - p_{1,min} \cdot A_1\right)$$

mit:

| | |
|---|---|
| $p_{1,min}$ | minimaler Anpreßdrucksollwert Primärseite |
| $p_{2,min}$ | minimaler Anpreßdrucksollwert Sekundärseite |
| $P\_S1\_MAX$ | maximaler zulässiger Druckwert Primärseite |
| $P\_S2\_MAX$ | maximaler zulässiger Druckwert Sekundärseite, |

wobei jeweils für die Drücke der Primär- bzw. Sekundärseite die maximal zulässigen Druckwerte P_S1_MAX bzw. P_S2_MAX eingesetzt werden und wobei die Berechnung der minimalen Anpreßdruckkräfte bzw. Anpreßdrucksollwerte für beide Variatorseiten anhand folgender Gleichungen erfolgt:

$$p_{1,min} = \frac{T_1 \cdot \cos(\alpha)}{2 \cdot \mu \cdot A_1 \cdot r_1} \cdot SF_1$$

und

$$P_{2,min} = \frac{T_1 \cdot \cos(\alpha)}{2 \cdot \mu \cdot A_2 \cdot r_1} \cdot SF_2$$

mit:

| $p_{1,min}$ | Anpreßdruckminimalkraft Primärseite |
|---|---|
| $P_{2,min}$ | Anpreßdruckminimalkraft Sekundärseite |
| $T_1$ | Antriebsmoment an der Primärseite des Variators |
| $A_1$ | Scheibenfläche der Primärseite |
| $A_2$ | Scheibenfläche der Sekundärseite |
| $r_1$ | aktueller Laufradius Primärseite |
| $\alpha$ | Scheibenwinkel |
| $\mu$ | Reibbeiwert des Kontaktes Band-Kegelscheibe |
| $SF_1$ | Sicherheitsfaktor der Primärseite |
| $SF_2$ | Sicherheitsfaktor der Sekundärseite, |

und dass die Berechnung des zulässigen Verstellgeschwindigkeitsbereichs für eine Rückschaltung ivpktvol_max bzw. für eine Hochschaltung ivpktvol_min in Abhängigkeit der Volumenstromgrenzen mittels der Gleichungen

$$ivpktvol\_max = Q\_Verstell/dVS2\_diV$$

und
ibpktvol_min = Q_Verstell/dVS1_diV erfolgt, wobei der zur Verfügung stehende Ölvolumenstrom Q_Verstell aus der Volumenstrombilanz
$Q\_Verstell = Q\_Pumpe-\Sigma\ Q\_Leck$ berechnet wird, wobei $\Sigma\ Q\_Leck$ die Summe aller Leckagevolumenströme darstellt.

**3.** Verfahren nach Anspruch 2, **dadurch gekennzeichnet, dass** die Summe aller Leckagevolumenströme $\Sigma\ Q\_Leck$ mittels folgender Gleichung

$$\Sigma\ Q\_Leck = Q\_Leck\_S1 + Q\_Leck\_S2 + Q\_Leck\_KV + Q\_Leck\_WK +$$

$$Q\_Leck\_STG + Q\_Schmier$$

berechnet wird mit:

Q_LeckS1 = Leckagevolumenstrom der Variatorprimärseite
Q_LeckS2 = Leckagevolumenstrom der Variatorsekundärseite
Q_LeckKV = Leckagevolumenstrom der Vorwärtskupplung
Q_LeckWK = Leckagevolumenstrom der Wandlerüberbrückungskupplung
Q_Leck_STG = Leckagevolumenstrom des hydraulischen Steuergeräts und
Q_Schmier = Leckagevolumenstrom des Schmierkreises, wobei gilt:

$$Q\_LeckS1 = K\_QLECKS1 * p\_s1$$

$$Q\_LeckS2 = K\_QLECKS2 * p\_s2$$

$$Q\_LeckKV = K\_QLECKKV * p\_kv$$

$$Q\_LeckWK = K\_QLECKWK * p\_wk$$

Q_Schmier = konstant, wobei p_s1, p_s2, p_kv und p_wk die Drücke an der Primärseite, der Sekundärseite, der Vorwärtskupplung und der Wandlerüberbrückungskupplung sind und
K_QLECKS1, K_QLECKS2, K_QLECKKV und K_QLECKWK die betriebspunktanhängigen Systemkonstanten darstellen.

4. Verfahren nach Anspruch 3 **dadurch gekennzeichnet, daß** die prinzipielle Öltemperaturabhängigkeit der Parameter bei der Erzeugung der Daten berücksichtigt wird.

5. Verfahren nach Anspruch 1 bis 4, **dadurch gekennzeichnet, daß** bei der Berechnung der Verstellgrenzen eine vorliegende Priorisierung der Ansteuerzweige in der Hydraulik berücksichtigt wird.

6. Verfahren nach Anspruch 5, **dadurch gekennzeichnet, daß** die Berücksichtigung der Prioritäten derart erfolgt, daß zunächst geprüft wird, ob der erforderliche Ölvolumenstrom zur Verfügung steht, wobei wenn diese Bedingung nicht erfüllt ist, zuerst der Zweig der Schmierung Q_Schmier und dann der Zweig der Wandlerüberbrückungskupplung Q_Leck_WK aus der Berechnung herausgenommen wird, und wobei der Verstellvorgang (im Grenzfall bis zum Festhalten der aktuellen Übersetzung) eingeschränkt wird, wenn auch nach Herausnehmen der Terme aus der Berechnungsformel immer noch nicht ausreichend Ölvolumenstrom für die Verstellung vorhanden ist.

7. Verfahren nach einem der vorangehenden Ansprüche, **dadurch gekennzeichnet, dass** der Zugriff auf dVS1_diV und dVS2_diV über Kennlinien erfolgt.

8. Verfahren nach einem der vorangehenden Ansprüche, **dadurch gekennzeichnet, dass** zur Optimierung der Rechenzeit die in der Berechnung enthaltenen Leckagevolumenströme als Kennlinien bzw. Kennfelder dargestellt werden.

**Claims**

1. Method for controlling the multiplication of a continuously variable transmission with electro-hydraulic drive using a control loop having a linear PID controller with the nominal multiplication of the variator iv_soll serving as a command variable, with the actual multiplication iv serving as a regulating variable and with the multiplication changing speed serving as correcting variable, **characterized in that** the correcting variable supplied by the PID controller is limited to limiting values, said limiting values being determined by the design, for an upshift and downshift, whereby these limiting values can be calculated from the limits determined by construction and from the operating point-dependent limits determined by volume flow, and the . intersection of both permissible intervals determined by construction and by volume flow is defined as a permissible multiplication changing speed range.

2. Method according to claim 1, **characterized in that** the design-related limiting values of the multiplication changing speed for an

$$\text{upshift} \quad \left. \frac{div}{dt} \right|_{konstr.,min}$$

and for a downshift

$$\left. \frac{div}{dt} \right|_{konstr.,max}$$

are on the basis of the following equations,

$$\left. \frac{div}{dt} \right|_{konstr.,min} = \frac{1}{k(iv)} \cdot \left( p_{2,min} \cdot A_2 \cdot k_p k_s - P\_S1\_MAX \cdot A_1 \right)$$

$$\left.\frac{div}{dt}\right|_{konstr.,max} = \frac{1}{k(iv)} \cdot \left(P\_S2\_MAX \cdot A_2 \cdot k_p k_s - p_{1,min} \cdot A_1\right)$$

| | |
|---|---|
| $p_{1,min}$ | minimum contact pressure nominal value primary side |
| $p_{2,min}$ | minimum contact pressure nominal value secondary side |
| P_S1_max | maximum permitted pressure value primary side |
| P_S2_max | maximum permitted pressure value secondary side |

whereby for each pressure of the primary and/or secondary side the max. permitted pressure values P_S1_ MAX or P_S2_ MAX are used, and whereby the calculation of the min. contact pressure forces and/or the contact pressure nominal values for both variator sides is based on the following equations:

$$p_{1\_min} = \frac{T_1 \cdot \cos(\alpha)}{2 \cdot \mu \cdot A_1 \cdot r_1} \cdot SF_1$$

and

$$p_{2\_min} = \frac{T_1 \cdot \cos(\alpha)}{2 \cdot \mu \cdot A_2 \cdot r_1} \cdot SF_2$$

with:

| | |
|---|---|
| $p_{1,min}$ | Contact pressure min. force primary side |
| $p_{2,min}$ | Contact pressure min. force secondary side |
| $T_1$ | Input torque on primary side of the variator |
| $A_1$ | Pulley surface of primary side |
| $A_2$ | Pulley surface of secondary side |
| $r_1$ | Current running radius primary side |

| | |
|---|---|
| $\alpha$ | Pulley angle |
| u | Friction value of band/cone pulley contact |
| $SF_1$ | Safety factor primary side |
| $SF_2$ | Safety factor secondary side |

and that calculation of the permitted adjusting speed range for a downshift ivpktvol_max and/or for an upshift ivpktvol_min determined by the volume flow limits is based on the equations

ivpktvol_max = Q_Verstell/dVS2_div and

ibpktvol_min = Q_Verstell/dVS1_div, whereby the available oil volume flow Q_Verstell is calculated on the basis of the volume flow balance
Q_Verstell = Q_Pumpe-$\Sigma$ Q_Leck, whereby $\Sigma$ Q Leck represents the sum of all leak volume flows.

3. Method according to claim 2, **characterized in that**
the sum of all leak volume flows $\Sigma$ Q_Leck is calculated on the basis of the following equation:

$$\Sigma\ Q\_Leck = Q\_Leck\text{-}S1 + Q\_Leck\_S2 + Q\_Leck\ KV + Q\_Leck\_WK +$$

$$Q\_Leck\_STG + Q\_Schmier$$

with:

Q_LeckS1 = leak volume flow of variator primary side
Q_LeckS2 = leak volume flow of variator secondary side
Q_LeckKV = leak volume flow of forward clutch
Q_LeckWK =leak volume flow of torque converter lockup clutch
Q_Leck_STG = leak volume flow of hydraulic control unit and
Q_Schmier = leak volume flow of lubrication circuit, whereby the following applies:

$$Q\_LeckS1 = K\_QLECKS1 * p\_s1$$

$$Q\_LeckS2 = K\_QLECKS2 * p\_s2$$

$$Q\_LeckKV = K\_QLECKKV * p\_kv$$

Q_Schmier = constant, whereby p_s1, p_s2, p_kv and p_wk are
the pressures on the primary side, the secondary side, the forward clutch and the torque converter lockup clutch and
K_QLECKS1, K_QLECKS2, K_QLECKKV and K_QLECKKV
represent the operating point-dependent system constants.

**4.** Method according to claim 3 **characterized in that** the general dependence of the parameters on the oil temperature is considered in data generation.

**5.** Method according to claims 1 to 4, **characterized in that** in calculating the adjustment limits, prioritization of control branches in the hydraulic system is considered.

**6.** Method according to claim 5, **characterized in that** the consideration of priorities is as follows: first, a check whether required oil volume flow is available; if this condition is not fulfilled, the branch for lubrication Q_Schmier and then the branch for the torque converter lockup clutch Q_Leck_WK is omitted in the calculation. The adjusting procedure (in border case until hold of current multiplication) is limited if after omission from the calculation formula there is still not enough oil volume flow for adjustment.

**7.** Method according to one of the previous claims, **characterized in that** access to dVS1_div and dVS2_div is realized via characteristics.

**8.** Method according to one of the previous claims, **characterized in that** for calculation time optimization, the leak volume flows included in the calculation are represented as characteristics curves/diagrams.

**Revendications**

**1.** Méthode de réglage des rapports de démultiplication d'une transmission à variation continue pilotée par une commande électrohydraulique, au moyen d'un circuit de réglage avec un régulateur linéaire proportionnel, le rapport de démultiplication de consigne du variateur iv_soll étant la grandeur de référence, le rapport de démultiplication réel iv étant la grandeur réglée et la vitesse de variation du rapport de démultiplication étant la valeur réglante, **caractérisée en ce que** la valeur réglante fournie par le régulateur proportionnel est limitée, lors d'un passage montant ou d'une rétrogradation, à des valeurs limites conditionnées par le type de construction de la transmission, sachant que ces valeurs limites sont calculées à partir des limites conditionnées par la conception et le débit dépendants du point de fonctionnement et que l'intersection d'ensemble des deux intervalles admissibles conditionnés par la conception et le débit sont définis comme la plage de vitesse de variation du rapport de démultiplication admissible.

2. Méthode selon la revendication 1, **caractérisée en ce que** les valeurs limites de la vitesse de variation du rapport de démultiplication conditionnées par la conception sont calculées : pour un passage montant

$$\left.\frac{div}{dt}\right|_{konstr.,min}$$

et pour une rétrogradation

$$\left.\frac{div}{dt}\right|_{konstr.,max}$$

au moyen des équations suivantes :

$$\left.\frac{div}{dt}\right|_{konstr.,min} = \frac{1}{k(iv)} \cdot \left(p_{2,min} \cdot A_2 \cdot k_p k_s - P\_S1\_MAX \cdot A_1\right)$$

$$\left.\frac{div}{dt}\right|_{konstr.,max} = \frac{1}{k(iv)} \cdot \left(P\_S2\_MAX \cdot A_2 \cdot k_p k_s - p_{1,min} \cdot A_1\right)$$

avec :

| | |
|---|---|
| $p_{1,min}$ | valeur de consigne pression appliquée mini. côté primaire |
| $p_{2,min}$ | valeur de consigne pression appliquée mini. côté secondaire |
| P_S1_ MAX | valeur de pression maxi. admissible côté primaire |
| P_S2_ MAX | valeur de pression maxi. admissible côté secondaire, |

sachant que, respectivement pour les pressions des côtés primaire et secondaire, sont utilisées les valeurs de pression max. admissibles P_S1_MAX ou P_S2_MAX et sachant que le calcul des forces de pression minimum appliquées ou des forces de consigne de pression appliquées des deux côtés du variateur s'effectuera sur la base des équations suivantes :

$$p_{1\_min} = \frac{T_1 \cdot \cos(\alpha)}{2 \cdot \mu \cdot A_1 \cdot r_1} \cdot SF_1$$

et

$$p_{2\_min} = \frac{T_1 \cdot \cos(\alpha)}{2 \cdot \mu \cdot A_2 \cdot r_1} \cdot SF_2$$

avec:

| $p_{1,min}$ | Force de pression minimum appliquée côté primaire |
|---|---|
| $p_{2,min}$ | Force de pression minimum appliquée côté secondaire |
| $T_1$ | Couple d'entrée côté primaire du variateur |
| $A_1$ | Surface de la poulie côté primaire |
| $A_2$ | Surface de la poulie côté secondaire |
| $r_1$ | Rayon de déplacement actuel côté primaire |
| $\alpha$ | Angle poulie |
| $\mu$ | Coefficient de friction du contact courroie / poulie conique |
| $SF_1$ | Facteur de sécurité du côté primaire |
| $SF_2$ | Facteur de sécurité du côté secondaire, |

et **en ce que** le calcul de la plage de vitesse de variation admissible pour une rétrogradation ivpktvol_max ou pour un passage montant ivpktvol_min est réalisé, en fonction des limites du débit, au moyen des équations

$$ivpktvol\_max = Q\_Verstell/dVS2\_div$$

et
ibpktvol_min = Q_Verstell/dVS1_div, sachant que le débit d'huile à disposition Q_Verstell est calculé à partir du bilan du débit
Q_Verstell = Q_Pumpe-$\Sigma$ Q_Leck, sachant que $\Sigma$Q_Leck représente la somme de tous les débits de fuites.

3. Méthode selon la revendication 2, **caractérisée en ce que** la somme de tous les débits de fuites $\Sigma$ Q_Leck est calculée au moyen de l'équation suivante:

$$\Sigma\ Q\_Leck = Q\_Leck\_S1 + Q\_Leck\_S2 + Q\_Leck\_KV + Q\_Leck\_WK +$$

$$Q\_Leck\_STG + Q\_Schmier$$

avec:

Q_LeckS1 = Débit de fuite du côté primaire du variateur
Q_LeckS2 = Débit de fuite du côté secondaire du variateur
Q_LeckKV = Débit de fuite de l'embrayage avant
Q_LeckWK = Débit de fuite de l'embrayage de pontage du convertisseur
Q_Leck_STG = Débit de fuite du bloc hydraulique et
Q_Schmier = Débit de fuite du circuit de lubrification, où il vaut

$$Q\_LeckS1 = K\_QLECKS1 * p\_s1$$

$$Q\_LeckS2 = K\_QLECKS2 * p\_s2$$

$$Q\_LeckKV = K\_QLECKKV * p\_kv$$

$$Q\_LeckWK = K\_QLECKWK * p\_wk$$

Q_Schmier = constant, sachant que p_s1, p_s2, p_kv et p_wk sont les pressions sur le côté primaire, le côté secondaire, au niveau de l'embrayage avant et au niveau de l'embrayage de pontage du convertisseur et que K_QLECKS1, K_QLECKS2, K_QLECKKV et K_QLECKWK représentent les constantes de système dépendantes du point de fonctionnement.

4. Méthode selon la revendication 3 **caractérisée en ce que**, lors de la génération des données est prise en compte la dépendance fondamentale de la température de l'huile des paramètres.

5. Méthode selon une des revendications de 1 à 4, **caractérisée en ce que** lors du calcul des limites de variation est prise en compte une priorisation existante des branches de pilotage du circuit hydraulique.

6. Méthode selon la revendication 5, **caractérisée en ce que** la prise en compte des priorités s'effectue de façon à ce que l'on vérifie d'abord si le débit d'huile nécessaire est à disposition, sachant que - lorsque cette condition n'est pas remplie - est retiré du calcul d'abord la branche de la lubrification Q_Schmier et ensuite la branche de l'embrayage de pontage du convertisseur Q_Leck_WK, et sachant que l'opération de variation (dans le cas limite jusqu'au maintien du rapport de démultiplication actuel) est limitée, lorsque - même après enlèvement des termes de la formule de calcul - il n y aura toujours pas un débit d'huile assez suffisant pour effectuer la variation.

7. Méthode selon une des revendications précédentes, **caractérisée en ce que** l'accès à dVS1_div et dVS2_div s'effectue par l'intermédiaire de lois.

8. Méthode selon une des revendications précédentes, **caractérisée en ce que**, pour l'optimisation du temps de calcul, les débits de fuites contenus dans le calcul sont représentés en tant que lois ou champs caractéristiques.

Fig. 1

Fig. 2

Fig. 3